# EUROPÄISCHE PATENTSCHRIFT

(11) **EP 0 320 740 B1**
(45) Veröffentlichungstag und Bekanntmachung des Hinweises auf die Patenterteilung: **09.03.1994**
(21) Anmeldenummer: 88120274.1
(22) Anmeldetag: 05.12.1988
(51) Int. Cl.: A61C 8/00

(54) **Schraubenimplantat für einen Kieferknochen**
Screw implant for a jaw bone
Implant de vis pour un os de la mâchoire

(30) Priorität: 12.12.1987 DE 3742158
(43) Veröffentlichungstag der Anmeldung: 21.06.1989
(73) Patentinhaber: DENTAL-LABOR ERNST BAUER, 61231 Bad Nauheim (DE)
(72) Erfinder: Bauer, Ernst, Dr., D-6350 Bad Nauheim (DE); Schuster, Wilhelm (verstorben), D- 6352 Ober-Mörlen (DE)
(74) Vertreter: Fuchs Mehler Weiss

(56) Entgegenhaltungen:
- EP-A- 0 026 246
- EP-A- 0 092 209
- EP-A- 0 111 134
- FR-A- 2 350 824

## Beschreibung

Die Erfindung betrifft ein Schraubenimplantat für einen Kieferknochen, bestehend aus einem in den Kieferknochen einschraubbaren, mit Gewinde versehenen konischen Implantatkörper, der ein Kompressionsgewinde aufweist, dessen Gewindegänge konkav ausgebildet sind, einem Implantathals und einem konischen Implantatpfosten zur Aufnahme eines Zahnersatzes oder einer Subkonstruktion.

Ein solches Schraubenimplantat ist aus der EP-A- 0 111 134 bekannt.

Zahnimplantate sind in zahlreichen Ausformen bekannt geworden. Nur wenige davon haben in die Praxis Eingang gefunden, wobei insbesondere Nadelimplantate, Klingen- oder Blattimplantate und Schraubenimplantate verwendet wurden. Aber auch die zunehmend als besonders bevorzugt angesehenen Schraubenimplantate konnten die in sie gesetzten Hoffnungen nicht erfüllen. Die vorgeschlagenen Ausführungsformen haben sich als mangelhaft erwiesen, insbesondere wegen ihrer unzulänglichen Verankerung, der bewirkten Schädigungen der Knochensubstanz sowie der umständlichen Einlegung.

In der DE-OS 22 55 916 ist ein Schraubenimplantat beschrieben, dasein helikoidal ausgebildetes Gewinde sowie einen im wesentlichen konstanten Außendurchmesser aufweist. Mit einer solchen Gewindeausbildung soll eine gute anfängliche Verankerung erzielt und der Verankerungseffekt im Verlauf der Zeit noch verbessert werden. Dies trifft jedoch nicht zu. Der Durchmesser des Schaftes ist verhältnismäßig groß und beim Implantieren schneidet sich das Gewinde in das Knochenbett ein, wobei Zerstörungen der Knochensubstanz nicht zu vermeiden sind. In den Gewindegängen werden Leerräume gebildet, die die Haltbarkeit des Implantats beeinträchtigen und außerdem Infektionsherde sind. Ferner kann das starre, nicht biegbare Schraubenimplantat nicht ausgerichtet werden. In der Regel ist ein Kürzen eines zu langen Implantats nur durch Zurechtschleifen des an dem vom Implantathals getragenen Pfeilers oder Pfostens möglich. Dies ist für den Patienten besonders unangenehm, da das Schleifen nach dem Einlegen des Implantats erfolgt.

Eine weitere Ausführungsform eines Schraubenimplantats ist aus der DE-OS 31 36 602 bekannt, das einen konischen Schraubenschaft mit einer Gewinde-Helix aufweist. Auch dieser Vorschlag hat zum Ziel, dem Implantat eine größere Festigkeit im implantierten Zustand zu verleihen. Aus dieser Druckschrift wird deutlich, daß bei Schraubenimplantaten der Form des Gewindes eine besondere Bedeutung zur Erfüllung der Aufgabe zugemessen wird. So werden sehr genaue Angaben gemacht. Aus den Gängen der Gewinde-Helix sind in Bogenabständen, die kleiner als 360°, jedoch ungleich 180° sind, etwa radial gerichtete, vom Umfang der Helix ausgehende V-förmige Einschnitte ausgespart, deren Spitzen im Bereich der Schaftoberfläche liegen. Ferner sind in Eindrehrichtung noch vorspringende Anschärfungen vorgesehen. Es wird also ein sehr scharf schneidendes Gewinde verlangt und es ist offensichtlich, daß sich ein solches Implantat verhältnismäßig tief in die Knochensubstanz einschneidet. Daraus ergeben sich aber die gleichen Nachteile, nämlich Zerstörungen und Leerraumbildung wie bei der erstgenannten Ausführungsform. Hinzu kommt, daß ein Ausrichten des eingelegten Implantats nicht möglich ist und es müssen auch hier zur Anpassung Schleifarbeiten durchgeführt werden.

Aus der bereits eingangs genannten EP-A- 0 111 134 ist ein Schraubenimplantat bekannt, das zweistückig ausgeführt ist, um ein besseres Einwachsen des Schraubteils in den Kieferknochen zu gewährleisten. Erst nach erfolgter Heilung wird der Implantatkopf aufgesetzt. Das Implantat selbst besteht aus Keramik und ist in seinen Komponenten nicht bearbeitbar oder biegbar.

Aus der EP-A-0092209 ist ein weiteres Schraubenimplantat mit im wesentlichen zylindrischen Gewindeschaft bekannt geworden. Auch diesem Implantat haften die bereits erwähnten Nachteile sämtlicher bekannt gewordener Schraubenimplantate an. Insbesondere führt die Gestaltung des Gewindeschaftes beim Eindrehen des Implantates zu großräumigen Zerstörungen des Knochenbettes.

Den bekannten Schraubenimplantaten ist gemeinsam, daß ihre endgültige Lage durch die Orientierung des zuvor stets im Knochenbett einzubringenden Bohrkanals festgelegt ist. Bedenkt man, daß der Zahnersatz oder eine Subkonstruktion hernach auf den Implantatpfosten aufgebracht wird, wird klar, daß die Orientierung des Bohrkanals unmittelbar die spätere Orientierung einer Suprastruktur bestimmt. Zwar wäre es denkbar, den Bohrkanal mit höchster Präzision im Knochenbett einzubringen. Dies stellt aber in der Praxis ein aussichtsloses Unterfangen dar. Eine nachherige, auch noch so geringfügige Korrektur der Orientierung des Implantatpfostens ist ohne Zerstörungen des Knochenbettes nicht denkbar.

Die US-A-4,645,453 zeigt einen biegsamen Adapter für ein Schraubenimplantat. Dieser ist mit einem Verankerungsteil verbindbar. Das Verankerungsteil weist eine Aussparung oder Ausnehmung auf, in welche der Adapter einsetzbar ist. Das Implantat besteht mithin aus zwei Komponenten. Unmittelbar hieraus folgt, daß die Orientierung des Kopfteils des Adapters durch Biegen der Biegezone außerhalb des Mundes des Patienten zu erfolgen hat, da das Verankerungs- bzw. Schaftteil über keinerlei Möglichkeit verfügt, sich selbsttätig in das Knochenbett einzudrehen und daher kein geeignetes Widerlager bei einer eventuellen Biegebeanspruchung ausbilden kann. Vielmehr besteht das Schaftteil aus einem mit Bohrungen versehenen zylindrischen Teil, das in eine entsprechend vorzubereitende Bohrung im Knochenbett eingesetzt wird. Die Bohrungen dienen dabei zum Einwachsen von Knochenmaterial.

Aufgabe der vorliegenden Erfindung ist es, das Schraubenimplantat gemäß EP-A- 0 111 134 so fortzubilden, daß es einfach und sicher im Kieferknochen befestigt werden kann und ein bequemes Aufsetzen von Zahnersatz zuläßt.

Diese Aufgabe wird dadurch gelöst, daß das Implantat einstückig ausgebildet ist, daß am oberen Ende des Implantatkörpers eine Implantatschulter angeformt ist, die in den als Biegezone gestalteten Implantathals übergeht, und daß auf einer konischen Erweiterung des Implantathalses der konische Implantatpfosten angeformt ist.

Zweckmäßige Weiterbildungen des erfindungsgemäßen Schraubenimplantates sind in den Unteransprüchen gekennzeichnet.

Das speziell gestaltete Kompressionsgewinde setzt nach Durchtritt der kompakten Knochensubstanz des Alveolarkammes die kontaktierte spongiöse Knochensubstanz, also das Knochengewebe, unter einen allmählich ansteigenden Preßdruck, wobei eine außerdordentlich hohe Primärstabilität bereits beim Einschrauben erreicht wird. Der Implantatkörper mit seinem Kompressionsgewinde ist so ausgelegt, daß das umgebende Knochengewebe nur innerhalb seines Elastizitätsbereichs verformt, nicht aber zerstört wird. Durch die konkave, im wesentlichen Kreisbogen-Form der Gewindegänge erfolgt eine gleichmäßige radiale Verdrängung der Knochensubstanz, die die Rundungen zwischen den Gewindewendeln ausfüllt, so daß keinerlei Leerräume mit all ihren bekannten Folgeerscheinungen auftreten. Dank der Formgebung des Implantatkörpers erfolgt beim Einschraubvorgang ein selbsttätiges Zentrieren nach einem vorgegebenen Bohrkanal. Der Durchmesser des Implantats ist sehr klein gehalten. Zum Einlegen des Implantats wird zunächst mit einem klein dimensionierten Implantatbohrer, dessen Durchmesser kleiner ist als der größte Durchmesser des Implantatkörpers vorgebohrt. Es ist ein kleiner Eingriff, bei dem die Knochensubstanz nicht zerschnitten und nur sehr wenig von dieser Knochensubstanz entfernt wird. Durch das vorgebohrte Implantatbett wird das Implantat axial geführt.

Durch den Bohrkanal kann mittels einer Sonde die genaue Tiefe von Alveolarkamm bis zum Gegenkortikalis gemessen und fixiert und damit die Länge des Implantatkörpers bestimmt werden. Falls das einzulegende Implantat nun etwas länger ist, kann es einfach durch Abschleifen am Implantatfuß auf die erforderliche Länge gekürzt werden.

Der erfindungsgemäß als Biegezone ausgebildete Implantathals ermöglicht ein exaktes Ausrichten des Implantatpfostens nach dem Einlegen des Implantats.

Es kann in einfachen, zügig aufeinanderfolgenden Arbeitsschritten das endgültige Einlegen des Schraubenimplantats durchgeführt werden, nämlich Vorbohren eines engen Kanals bzw. Implantatbettes, Abmessen der erforderlichen Länge des Implantatkörpers und gegebenenfalls Kürzen dieses Körpers am Implantatfluß, Einschrauben des Implantats und Ausrichten des Implantatpfostens. Auf diese Weise ist stets ein Optimum an Paßgenauigkeit und Implantatsitz zu erzielen. Während des Biegevorgangs ist die Parallelität mit den Restzähnen oder die Lotrechte mit dem Kieferkamm kontrollierbar und vergleichbar.

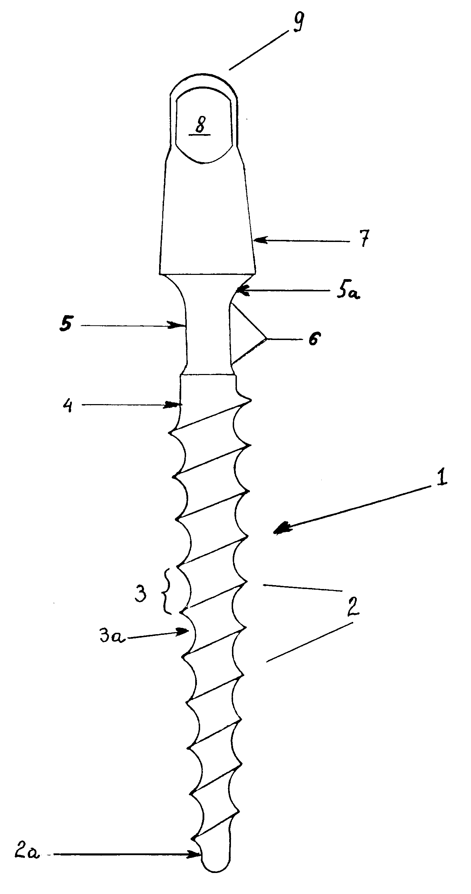

Das Schraubenimplantat wird anhand einer schematischen Darstellung näher erläutert. Die einzige Figur zeigt eine Seitenansicht des Implantats.

Das Schraubenimplantat besteht aus einem konischen Implantatkörper 1 mit einem Kompressionsgewinde 2, dessen Gewindegänge 3 konkav ausgebildet sind. Die größte Tiefe 3a beträgt vorzugsweise etwa ein Drittel der Höhe der Gewindegänge 3. Am oberen Ende anschließend an das Kompressionsgewinde 2 ist eine Implantatschulter 4 angeformt, die einen als Biegezone 6 gestalteten Implantathals 5 trägt. Auf einer konischen Erweiterung 5a des Implantathalses 5 sitzt ein sich nach oben konisch verjüngender Implantatpfosten 7. Am oberen Endbereich dieses Implantatpfostens 7 sind jeweils zwei gegenüberliegende Flächen 8 vorgesehen. Gezeigt ist in der Zeichnung eine der Flächen 8. Diese Flächen 8 bilden einen Vierkant, der zum Ankoppeln eines Instruments, das als Einschraubhilfe, als Pfostenbieger und als Ausrichter dient. Der Kopf 9 des Implantatpfostens ist halbkugelförmig gerundet. Der Konus des Implantatpfostens 7 setzt sich, im Spitzkant gesehen, über die gesamte Länge ohne Unterbrechung fort, so daß die Führungslinien erhalten bleiben.

Da am Implantatpfosten weder vor noch nach dem Einlegen des Implantats irgend welche Veränderungen vorgenommen werden müssen,können genormte Übertragungskappen mit einem Innenkonus verwendet werden, der die gleiche Gradzahl aufweist wie der Implantatpfosten. Dadurch ist eine exakte Abdrucknahme der entsprechenden Kieferregion möglich. Da der Konus der Abdruck-Pins wieder dem des Implantatpfostens 7 entspricht, ist im Gegenabdruck präzise die Implantatstellung wiedergegeben. Somit sitzen die anzufertigenden Primär- oder Subkonstruktionen absolut paßgenau.

Das Schraubenimplantat besteht vorzugsweise aus einer Titanlegierung und seine Oberfläche ist mit einer Schutzschicht aus Titanoxid nach ASTM F 86-68 passiviert.

## Patentansprüche

1. Schraubenimplantat für einen Kieferknochen, bestehend aus einem in den Kieferknochen einschraubbaren, mit Gewinde versehenen konischen Implantatkörper, der ein Kompressionsgewinde (2) aufweist, dessen Gewindegänge (3) konkav ausgebildet sind, einem Implantathals (5), und einem konischen Implantatpfosten (7) zur Aufnahme eines Zahnersatzes oder einer Subkonstruktion, dadurch gekennzeichnet, daß das Implantat einstückig ausgebildet ist, daß am oberen Ende des Implantatkörpers (1) eine Implantatschulter (4) angeformt ist, die in den als Biegezone (6) gestalteten Implantathals (5) übergeht, und daß auf einer konischen Erweiterung (5a) des Implantathalses (5) der konische Implantatpfosten (7) angeformt ist.

2. Schraubenimplantat nach Anspruch 1, dadurch gekennzeichnet, daß die größte Tiefe (3a) des einzelnen Gewindeganges (3) etwa ein Drittel seiner Steigungshöhe beträgt.

3. Schraubenimplantat nach Anspruch 1, dadurch gekennzeichnet, daß im oberen Endbereich des Implantatpfostens (7) jeweils zwei gegenüberliegende Flächen (8) zur Aufnahme eines Schlüsselvierkants eines Ausrichtwerkzeugs angeordnet sind.

4. Schraubenimplantat nach Anspruch 1 oder 3, dadurch gekennzeichnet, daß das freie Ende des Implantatpfostens (7) als Kugelkopf (9) ausgebildet ist.

5. Schraubenimplantat nach einem der Ansprüche 1 bis 4, dadurch gekennzeichnet, daß es aus einer Titanlegierung besteht und die Oberfläche des Implantats mit einer Schutzschicht aus Titanoxid passiviert ist.

## Claims

1. A screw implant for a jaw bone consisting of a threaded conical implant body that can be screwed into said jaw bone and comprising a compression thread (2), the thread turns thereof being developped concavely, said screw implant further consisting of an implant neck (5) and a tapered implant stay (7) in order to be suitable to receive a denture or a subconstruction thereof, characterized in that the implant is developped in one piece, that at the upper end of the implant body (1) an implant shoulder (4) is moulded turning to said implant neck (5) which is shaped as a bending zone (6) and that said conical implant stay (7) is moulded on a conical enlargement (5a) of said implant neck (5).

2. A screw implant according to claim 1, characterized in that the greatest deep (3a) of a single thread turn (3) is about one third of its lead.

3. A screw implant according to claim 1, characterized in that, at the upper section of the implant stay (7), two respective opposite planes (8) are disposed in order to get suitable for receiving a spanner square of an aligning tool.

4. A screw implant according to claims 1 or 3, characterized in that the free end of the implant stay (7) is developped as a spherical cap (9).

5. A screw implant according to one of claims 1 through 4, characterized in that it consists of a titanium alloy and that the surface of the implant is passivated by a protective layer of titanium oxide.

## Revendications

1. Implant de vis pour un os maxillaire, ledit implant étant composé d'un corps d'implant fileté et conique que l'on peut visser dans ledit os maxillaire et présentant un filetage à compression (2), dont les filets (3) montrent une forme concave, d'un cou d'implant (5) et d'un poteau d'implant conique (7) pour le logement d'un dentier ou d'une sous-construction, caractérisé en ce que l'implant est développé en une seule pièce, que l'on a intégré un épaulement d'implant (4) au bout supérieure du corps d'implant (1), ledit épaulement d'implant (4) se transformant en ledit cou d'implant (5) construit en tant que zone de pliage (6), et que l'on a intégré le poteau d'implant conique (7) dans un évasement conique (5a) du cou d'implant (5).

2. Implant de vis d'après la revendication 1, caractérisé en ce que la plus grande profondeur (3a) d'un seul pas de vis (3) se monte à environ un tiers de son pas.

3. Implant de vis d'après la revendication 1, caractérisé en ce que, dans le domaine extrême du poteau d'implant (7), on a disposé respectivement deux surfaces opposées (8) pour l'engrenage par une clé carrée d'un outil d'alignement.

4. Implant de vis d'après les revendications 1 ou 3, caractérisé en ce que le bout libre du poteau d'implant (7) est développé en tant que calotte sphérique (9).

5. Implant de vis d'après une des revendications 1 à 4, caractérisé en ce que ledit implant de vis consiste en un alliage de titan et que la surface dudit implant est rendue passive d'une couche protectrice en oxyde titanique.
